# EUROPEAN PATENT APPLICATION

(11) **EP 4 852 478 A1**
(43) Date of publication of application: **09.12.2026**
(21) Application number: 25181008.1
(22) Date of filing: 05.06.2025
(51) Int. Cl.: H04W 8/18, H04W 12/40, H04W 12/72

(54) **METHOD AND SYSTEM FOR DETERMINING AN ORIGIN OF A SUCI**

(71) Applicant: Giesecke+Devrient Mobile Security Germany GmbH, 81677 München (DE)
(72) Inventor: MISHRA, Santosh Kumar, 110 020 New Delhi (IN); SANGAI, Shreyas, 110 020 New Delhi (IN); MISHRA, Vivek Kumar, 122001 Gurugram (IN)
(74) Representative: Ter Meer und Partner mbB

(57) **Abstract**

Provided is a method and a corresponding system for determining an origin of a SUCI, preferably for 5^{th} generation networks. The method comprises: determining at least one identifier stored in the secure element and/or a terminal device hosting the secure element, wherein the at least one identifier includes the IMSI or NAI; determining a service table stored in the secure element at least partially; transmitting, the at least one identifier and the at least partial service table to a device management server; transmitting, by a core network entity, an identifier based on the SUCI to the device management server; determining the origin of the SUCI based on the at least partial service table and by matching the identifier determined based on the SUCI against the at least one identifier; and storing, by the device management server, the origin of the SUCI.

## Description

The present invention relates to a method for determining an origin of a SUCI and a corresponding system. In particular, the method enables detecting whether a terminal or a secure element hosted by the terminal and attached to a network is capable and/or responsible for calculating the SUCI for 5^{th} generation communication networks.

Massive amounts of mobile-capable devices connect daily to existing communication networks. The number of mobile-capable devices, in particular terminal devices or end (user) devices, is increasing at an accelerating pace due to the fourth industrial revolution which is driven by the Internet of Things, IoT.

For a secured communication over the mobile communication network, the mobile-capable terminal device contains a secure element, in particular a universal subscriber identity module, USIM, including at least one subscription. The subscription includes, for example, a cryptographic authentication key, an integrated circuit card identification, ICCID, and unique identity data, such as International Mobile Subscriber Identity, IMSI, the Network Specific ID, NSI, taking the form of a Network Access Identifier, NAI, the Global Cable Identifier, GCI, taking the form of a NAI or the Global Line Identifier, GLI, taking the form of an NAI, according to 3GPP TS 23.003 Version 18.7.0, clause 2.2A. The USIM application establishes, operates and terminates connections of the end device in the mobile network using the identity data.

In the standardization for 2nd to 4th generation communication networks, the IMSI was requested from the network to log the end device into the communication network. The end device or the SE then sends the IMSI unencrypted, i.e. in plain text, in a NAS message. This unencrypted IMSI poses a security problem, as so-called IMSI catchers can intercept this IMSI in order to locate the position of the end device.

To prevent IMSI catcher attacks, it has been specified for the 5th generation communication network that all identity data for logging into the network must be transmitted in encrypted form, see for example 3GPP TS 31.102 Version 18 or 3GPP TS 33. 501 version 18. In these 5G networks, the identity data (in particular IMSI, or NAI (NSI, GLI or GCI) for private network) is referred to as Subscription Permanent Identifier, SUPI, and transmitted in encrypted form as Subscription Concealed Identifier, SUCI, in the 5G network, see points 5.2.5 and 6.12 in 3GPP TS 33.501, version 18.9.0. The serving network shall authenticate the Subscription Permanent Identifier (SUPI) in the process of authentication and key agreement between the mobile-capable device and network.

When migrating an end device from 2^{nd} to 4^{th} generation communication networks to 5^{th} generation (5G) communication networks, the end device and/or its secure element thus need to be empowered to generate the SUCI. Since the operator of the serving network is not aware whether the end device or the secure element calculates the SUCI, at least the secure element needs to be replaced by a secure element that is known to be configured to generate the SUCI. However, such secure element is far more complex and expensive than a bare minimum file system creation and configuration update on an existing secure element to configure the existing secure element to work in a 5^{th} generation communication network with a 5^{G} enabled terminal device. End device manufacturers do not declare if the end devices are configured to generate the SUCI or support the GET IDENTITY command for the 5^{th} generation network. Thus, the operator of the serving network faces overhead such as additional costs as resource-rich secure elements capable of generating the SUCI are needed when migrating end devices to 5^{th} generation communication networks.

Hence, there is a need for at least partially reducing overhead for migrating a mobile-capable end device to a 5^{th} generation mobile communication network.

This objective is solved with the features of the independent claims. Further advantageous embodiments are described in the dependent patent claims.

According to an aspect of the invention, a method for determining an origin of a SUCI, preferably for 5^{th} generation networks, is provided. The SUCI may have been previously generated by the terminal device or a secure element hosted by the terminal device and used for authentication with a core network entity. In some cases, no SUCI has been generated, e. g., for certain authentication methods at a respective core network entity including a Non-Seamless Wireless LAN Offload, NSWO, context, or if the secure element or a terminal device hosting the secure element is not 5G-enabled. The method enables a device management server in the network to determine whether the SUCI has been calculated by the terminal device or by the secure element hosted by the terminal device, preferably based on a network type.

The method comprises determining at least one identifier stored in the secure element and/or a terminal device hosting the secure element, preferably after the secure element has been attached to the network. The at least one identifier includes the IMSI or the NAI, in particular a username part of a NAI, e. g., username@realm, for a private 5^{th} generation communication network. Determining the at least one identifier may include reading the respective identifier from a storage (e. g., filesystem) of the secure element and/or requesting the respective identifier from the terminal device.

The method further includes determining a service table stored in the secure element at least partially. Determining the service table may include reading the elementary file (EF) "USIM Service Table", EF_UST, according to point 4.2.8 in 3GPP TS 31.102 version 18.8.0. This EF indicates which services are available. If a service is not indicated as available in the secure element, the terminal device is not able to select this service.

The method further includes transmitting the at least one identifier and the at least partial service table to a device management server. The at least partial service table may include an activation status of the relevant services for determining the origin of the SUCI. Transmitting the at least one identifier and the at least partial service table (information) to a device management server may include sending the information to the device management server via an over-the-air (OTA) link.

The method further includes, receiving, by the device management server, an identifier used for authenticating at a respective core network entity. The identifier may be or include, depending on the network type, the MSIN, the IMSI or a username.

The method further includes determining the origin of the SUCI based on the at least partial service table and by matching the received identifier against the at least one identifier. Matching the received identifier against the at least one identifier may precede or include searching the received identified within the at least one identifier, in particular within a database of the device management server, which correlate the at least one identifier and the at least partial service table, and comparing the received identifier against the at least one identifier. If the received identifier is equal or included in the at least one identifier or one of the at least one identifier, the matching may indicate, by taking the at least partial service table into account, the origin to be in the secure element or in the terminal device. If the received identifier is not included in the at least one identifier, the matching may further indicate, by taking the at least partial service table into account, the network type to be a non-public network, NPN, whether NSWO context is supported and, whether it is a standalone non-public network, SNPN. In the case of a private network or NPN, the SUPI may have the form of a network access identifier (NAI), i. e., the subscription identifier part of the SUPI may include the "username" portion of the NAI as defined in NAI RFC 7542.

In case no SUCI has been calculated, the method may still determine whether the secure element is (hypothetically) capable of generating the SUCI based on the at least partial service table.

The method further includes storing, by the device management server, the origin of the SUCI.

Determining the origin of a SUCI and storing the determined origin at the device management server enables the latter to correlate further information collected on the respective terminal device in combination with the secure element with the determined origin of the SUCI. Based thereon, the operator of the core network server may know for future migrations which terminal devices support the calculation of the SUCI such that secure elements in these terminal devices will not be required to support the SUCI calculation and therefore may be equipped with a bare minimum file system on the existing and deployed secure element. Accordingly, the complexity and costs for migration of further terminal devices of a type known to the device management server may be reduced considerably.

The method may include one or more of the following aspects:
The received identifier may be extracted from the SUCI.

The method may further comprise prior to receiving the identifier, transmitting, by the core network entity, a notification based on a successful authentication to the device management server. The notification may comprise the identifier, preferably the notification comprises the identifier extracted from the SUCI.

In this variant, the device management server may be notified upon a new authentication of a terminal device at the core network entity. The core network entity may provide core logic to a 5G communication network, in particular a 5G mobile communication network.

The method may further comprise prior to receiving the identifier, requesting, by the device management server to a core network entity, the identifier. Preferably, the method includes requesting the identifier based on the at least one identifier transmitted to the device management server.

In this variant, the device management server may determine when to request the core network entity for specific identifiers. This variant may be particularly useful for public networks, in which it is expected that the identifier is or includes the IMSI. This variant enables to batch-process multiple identifiers, so that communication overhead with requesting the identifiers from the core network entity may be reduced. The device management server may determine the identifiers to request from the core network entity based on the terminal capability protocol.

The at least partial service table may be or include at least a portion of the elementary file USIM Service Table, EF_UST.

The at least partial service table may include the services n°124 and n°125. Determining the origin of the SUCI may further include: identifying the origin to be in the secure element in case the services n°124 and n°125 are activated; and identifying the origin to be in a terminal device hosting the secure element in case at least the service n°125 is deactivated. Based on the services n°124 and n°125, the responsibility of SUCI calculation may be efficiently determined. For instance, the SUCI was calculated by the secure element, if service n°124 and n°125 are both set to "ON" or by the terminal device, if Service n°124 is set to "ON" and service n°125 is set of "OFF".

The at least one identifier may further include an IMEI of the terminal device and an ICCID of the secure element. The method may further comprise storing the origin of the SUCI in a terminal capability protocol. The terminal capability protocol may include: a first attribute, in which the IMEI is stored; a second attribute, in which the ICCID is stored; and a third attribute, in which the received identifier or the origin of the SUCI is stored. The terminal capability protocol may be stored in a database, e. g., a terminal capability repository, connected to the device management server.

Preferably, the at least one identifier includes a triplet of identifiers, the triplet including the IMSI or the NAI, the IMEI, and the ICCID. This triplet of identifiers includes all relevant data links to efficiently correlate secure elements, terminal devices and their respective capability of generating the SUCI.

With the IMEI pointing to further terminal device characteristics such as the terminal device manufacturer and/or model, the structure of the terminal capability protocol has the technical effect of enabling an efficient look-up of the SUCI generation capability for a given terminal device. The terminal capability protocol may include a very large number of entries, exceeding 1 million of entries. The terminal capability protocol may be exclusively stored in a volatile memory.

The method may further include storing, in the third attribute, a value, preferably a Boolean value, which indicates whether the SUCI has been calculated by the terminal device. This value also indicated, at least implicitly, whether the secure element calculated the SUCI, since the SUCI may be generated exclusively by the terminal device or the secure element hosted by the terminal device. In this embodiment, the amount of data required to keep the origin of the SUCI calculation available for further use can be reduced.

The terminal capability protocol may include a fourth attribute, in which a value indicating whether the SUCI has been calculated by the secure element is stored. This value may also be a Boolean value. By additionally storing the value indicating whether the SUCI has been calculated by the secure element, the terminal capability protocol may also include terminal devices for 2^{nd} to 4^{th} generation networks, i. e., terminal devices that are not capable of generating the SUCI and which host a secure element that is neither capable of generating the SUCI.

In one embodiment, the third attribute of the terminal capability protocol may include the received identifier. The method may include storing the received identifier in the third attribute. The received identifier may be either the IMSI or the NAI which has been input in the SUCI calculation either calculated by the terminal device or the secure element. The SUCI as in encrypted form may encrypt either IMSI of MSIDN or username of NAI. So the origin of the SUCI may be determined to be either in the terminal device, when the received identifier includes, equals or matches the IMEI, as stored in the first attribute, or in the secure element, when the received identifier includes, equals or matches the ICCID, as stored in the second attribute.

In one embodiment, the third attribute of the terminal capability protocol may include a first element which indicates whether the SUCI has been calculated by the terminal device; and a second element which indicates whether the SUCI has been calculated by the secure element. The method preferably includes storing Boolean values in the first element and/or the second element.

Transmitting the identifier based on the SUCI may include encrypting the identifier. Accordingly, the IMSI or the NAI may be forwarded to the device management server in a privacy-protected manner. The identifier based on the SUCI may be or include the IMSI or the NAI.

The method may further include, upon receiving the identifier from the core network entity, storing, in the terminal capability protocol, a flag indicating that the identifier has been received from within a 5^{th} generation network. In other words, the device management server may be configured to derive based on the identifier received from the core network entity, the network type corresponding to the identifier.

The at least partial service table may include the service n°130. The method may further include determining a network type of the respective core network entity, wherein determining the network type to be a public network, preferably by identifying a Subscription Permanent Identifier, SUPI, type of the SUCI to be the IMSI, if the service n°130 is off; or determining the network type to be a private network, preferably by identifying the SUPI type of the SUCI to be the NAI, if the service n°130 is on. The method may further include storing the network type in the terminal capability protocol, preferably in a fifth attribute of the terminal capability protocol.

The identifier received from the core network entity may be matched against the terminal capability protocol and a mapping of IMEI (i.e. the terminal device) and the identifier is updated thereby adding a device-IMEI mapping to the terminal capability protocol.

The method may further include transmitting, by the core network server, an identity request to the terminal device, in particular a GET IDENTITY command; monitoring, by the secure element, a presence of the identity request at least one time, preferably regularly at a predetermined interval; and including the presence of the identity request in determining the origin of the SUCI.

Accordingly, the method may determine whether the terminal device has SUCI calculation capability and also capability of sending the GET IDENTITY command. Alternatively, the method may determine that the terminal device has only capability to send GET IDENTITY command, without having any SUCI calculation capability. In this case, the terminal device will enable the secure element to calculate SUCI and to send the SUCI response to server. Typically, low cost 5G terminal device may have at least the GET IDENTITY command support.

In practice, the identity request may be sent to the terminal device by the core network entity. Based on the EF_UST, the terminal device will send the GET IDENTITY command to the secure element for service n°124=on, n°125=on. The terminal device will not send the GET IDENTITY command to the secure element for service n°124=on, n°125=off. In this case, the SUCI calculation should be done by the terminal device. However, some terminal devices may not be capable of calculating the SUCI. Moreover, legacy terminal devices that may not interpret the services n°124 and n°125, no GET IDENTITY command may be sent to the secure element. Based on a combination of monitoring the GET IDENTITY command at the secure element and extracting the configuration of the partial service table, in particular the EF_UST n°124 and n°125, the GET IDENTITY capability of the terminal device may be determined. Accordingly, the terminal device may have GET IDENTITY capability, if the n°124=on, n°125=on and the GET IDENTITY command has been monitored at the secure element.

The method may include storing a result of monitoring the identity request, the at least one identifier and/or the at least partial service table in the secure element.

The method may further include transmitting, by the core network entity, a timer related to the SUCI, preferably the timer T3570; determining, by the device management server, based on the timer, a duration of generating the SUCI. Preferably, the method may further include storing the duration in a further attribute of the terminal capability protocol. Based on the timer information, in particular a delta between Stop-T3570 and Start-T3570 received from the core network entity, the time required by various devices/secure elements (especially vendor-specific) to calculate SUCI may be stored in the terminal capability protocol. This timer information / duration may be subsequently used for planning / preparing further migrations to the 5^{th} generation network more efficiently, in particular at large scale.

The at least partial service table may include the services n° 130, n°142 and/or n° 146. The service n°142 may defines a context type for authenticating at the respective core network entity.

The identity request may include a SUCI context type, wherein the SUPI may be of type "IMSI" or the SUPI may be of type "NAI" (NSI, GLI, GCI). Alternatively, the identify request may include a NSWO context type, wherein the NSWO context may support a SUPI type "IMSI" encoded in NAI form.

The identity request may include a SUCI context type with SUPI type "IMSI" or "NAI", or a NSWO context type with SUPI type "IMSI". In other words, the SUCI context type may be based on the specific code of the identify request. If the identity request is or includes the GET IDENTITY with P2=01/81, only the SUCI context type may be supported, or if the identity request is or includes the GETIDENTITY P2=02/82, the NSWO context type may be supported.

The method may further include determining, by the secure element, a network type based on the service n°142. The network type may be determined to be or include a Non-Seamless Wireless Lan Offload, NSWO, context if the service n°142 is on, and/or a SUCI context if the service n°142 is off. The method may further include transmitting the network type to the device management server or storing the network type in the secure element. If the network type has been transmitted to the device management server, storing, by the device management server, the network type in a fifth attribute of the terminal capability protocol.

The at least partial service table may further include the service n°146, which defines whether a private network is a standalone non-public network, SNPN. The method may further include: determining, by the secure element, the network type further based on the service n°146, wherein the network type is determined to include a SNPN identifier if the service n°146 is on.

When the secure element is configured for the NSWO context, the SUCI may be also calculated for SUPI Type IMSI, however, the SUCI response prepared by the secure element or the terminal device is in form of a username@realm. The use of WLAN offloading is particularly useful for saving the public network bandwidth for migration/transition of end user/user profiles and therefore is preferred by the respective network operator. Accordingly, determining an NSWO context capability of the terminal device and storing the NSWO context capability in (an attribute of) the terminal capability protocol may enable a significant advantage.

In the SUCI context, the IMSI is in encrypted (in hex) form only there is no @realm associated. In the NSWO context and configured for a public network (PLMN), a unique REALM part may be hardcoded and IMSI is encrypted in hex form (e. g., 5 byte of data in hex) but represented as ASCI digits (becomes 10 digits in ASCI-UTF-8). Accordingly, when the services 124=on, 125=on/off, 130=off, 142=on, and 146=off the SUCI response may include an encrypted MSIN@5gc-nswo.nid.mnc.mcc.3gppnetwork.org.

In the NSWO context and configured for a standalone private network (SNPN), the unique REALM part may be hardcoded with the "nid"-element in realm distinguishing the realm part from the one of a PLMN type. When the services 124=on, 125=on/off, 130=off, 142=on, and 146=on the SUCI response may include an encrypted MSIN@5gc-nswo.nid.mnc.mcc.3gppnetwork.org in ASCI-UTF-8.

In other words, if the terminal device determines to use the NSWO service, the terminal device shall use the SUCI in NAI format (i.e., username@realm format as specified in clause 28.7.3 and 28.7.12 of TS 23.003) as its identity.

Accordingly, storing the network type including information whether the NSWO context is enabled and/or PLMN/SNPN network identification as explained above with respect to the respective services of the at least partial service table, may further facilitate migration/transition of user profiles from lower generation networks to a 5G network.

The at least one identifier may further include an identifier for an electronic SIM, such as an embedded identify document (EID) or eUICCID. The method may further include determining, by the secure element, the IMSI or the NAI and IMEI associated with the EID to identify whether the terminal device is multiple enabled profile (MEP)-capable. The method may further include storing a value indicating a MEP-capability of the terminal device in a further attribute of the terminal capability protocol.

According to another aspect of the invention, a system for determining the origin of a SUCI and/or for enabling a secure communication over a communication network, preferably mobile communication network, is provided. The system comprises a terminal device hosting a secure element. The secure element may be operatively coupled to the terminal device. The system further comprises a core network entity of the communication network, and a device management server. The device management server may be directly connected via an over-the-air (OTA) link to the secure element. The system is configured to execute the method according to any of the aspects according to this disclosure. The terminal device, the secure element, the core network entity and the device management server may collectively execute the method according to any of the aspects according to this disclosure. The device management server may further include an OTA-server for providing a OTA-configuration to the secure element. Alternatively, the OTA-server may be an independent entity within the system.

The secure element may comprise a storage unit and a control unit. The control unit may be configured to execute, based on a received identity request, an encryption function to generate a subscription concealed identifier - SUCI - based on the SUPI.

Likewise, the terminal device may be configured to generate the SUCI upon receiving an identity request of the core network entity.

The control unit of the secure element may be configured to execute Java Card and/or Java-based applets. The part of the method executed by the secure element may be encoded by Java-based applets. In one embodiment, the device management server may be configured to provide a script or computer program which includes the respective commands that, when executed by the secure element, in particular its control unit, cause the secure element to execute the respective method steps. The script or computer program may be provided in an expanded or a compact format.

Based on the at least partial service table data communicated to the device management server, the latter can determine if the SUCI has been calculated for a particular network type (3GPP/Private/SNPN NETWORK) and store the respective network type in the terminal capability protocol which can then be useful for further business logic/evaluation.

For instance, the data collected and organized in the terminal capability protocol will clearly give the indication to the network operator a sufficiently large statistical sample (ensemble) on how many
1. 5G terminal devices are deployed in 5G network and which devices are capable to calculate SUCI on the terminal device side or capable of only sending the GET IDENTITY command;
2. 5G secure elements are deployed in 5G network (3GPP/PRIVATE/SNPN) and which one is calculating the SUCI at secure element side;
3. e-SIM(s) non MEP or MEP devices (Multiple ENABLED DEVICE) associated with IMSI and IMEI are deployed; and
4. older generation terminal devices (which do not support GET IDENTITY command) are still working with 5G-enabled secure element.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a method according to an aspect of the invention.
Fig. 2 shows an exemplary embodiment of a system according to an aspect of the invention.
Fig. 3a shows an exemplary timing sequence for a method according to a first aspect of the invention.
Fig. 3b shows an exemplary timing sequence for a method according to a second aspect of the invention.
Fig. 4 shows a decision tree for the portion of the EF_UST that is relevant for an aspect of the invention.

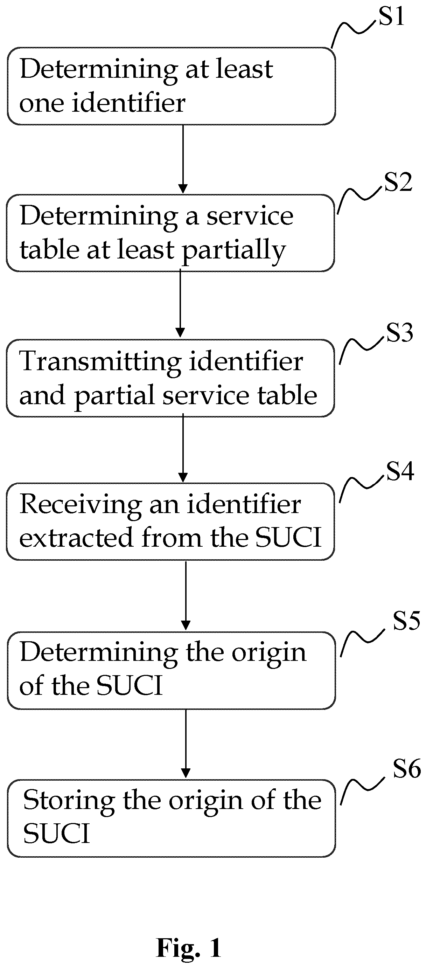

The embodiment of the method according to Fig. 1 includes a first step S1, which includes determining at least one identifier stored in the secure element SE and/or a terminal device TD hosting the secure element SE, wherein the at least one identifier includes the IMSI. Preferably, the first step includes determining a triplet of identifiers, i. e., exactly three identifiers, the triplet consisting of the IMSI or the NAI, the IMEI and the ICCID.

The embodiment of the method according to Fig. 1 includes a second step S2, which includes determining, by the secure element SE, a service table, preferably the EF_UST, stored in the secure element SE at least partially.

The embodiment of the method according to Fig. 1 includes a third step S3, which includes transmitting, by the secure element SE, the at least one identifier and the at least partial service table to a device management server DM.

The steps S1, S2 and S3 are executed by the secure element SE.

The embodiment of the method according to Fig. 1 includes a fourth step S4, which includes receiving, by the device management server DM, an identifier, preferably an identifier extracted from the SUCI.

The embodiment of the method according to Fig. 1 includes a firth step S5, which includes determining, by the device management server DM, the origin of the SUCI based on the at least partial service table and by matching the received identifier against the at least one identifier.

The embodiment of the method according to Fig. 1 includes a sixth step S6, which includes storing, by the device management server DM, the origin of the SUCI, preferably in a terminal capability protocol TC.

An example excerpt of a terminal capability protocol is provided as table 1:

**Table 1**

| IMEI | ICCID | SUCI origin in terminal device TD | Optional: SUCI origin in secure element SE | Optional: network type (Backward Compatibility 3G/2G/4G) |
|---|---|---|---|---|
| | | | | Context Type = "SUCI" context or "NSWO" context |
| X..1 | Z..1 | NO | YES | 5G Private EF_UST (124, 125, 130 =ON) |
| T..2 | W..2 | YES | NO | 5G 3GPP EF_UST (124 =ON, 125 =OFF, 130 =OFF) |
| E..3 | D..3 | NO | NO | 3G/4G |
| F..4 | X..3 | YES | NO | 5G 3GPP EF_UST (124 =ON, 125 =OFF, 130 =OFF) |
| T..5 | | | | |
| | | | | MEP Enabled device |
| T..8 | Z..2 | YES | NO | 5G 3GPP EF_UST (124 =ON, 125 =OFF, 130 =OFF, 142, 146 =ON) |
| | | | | SNPN Network and NSWO context |

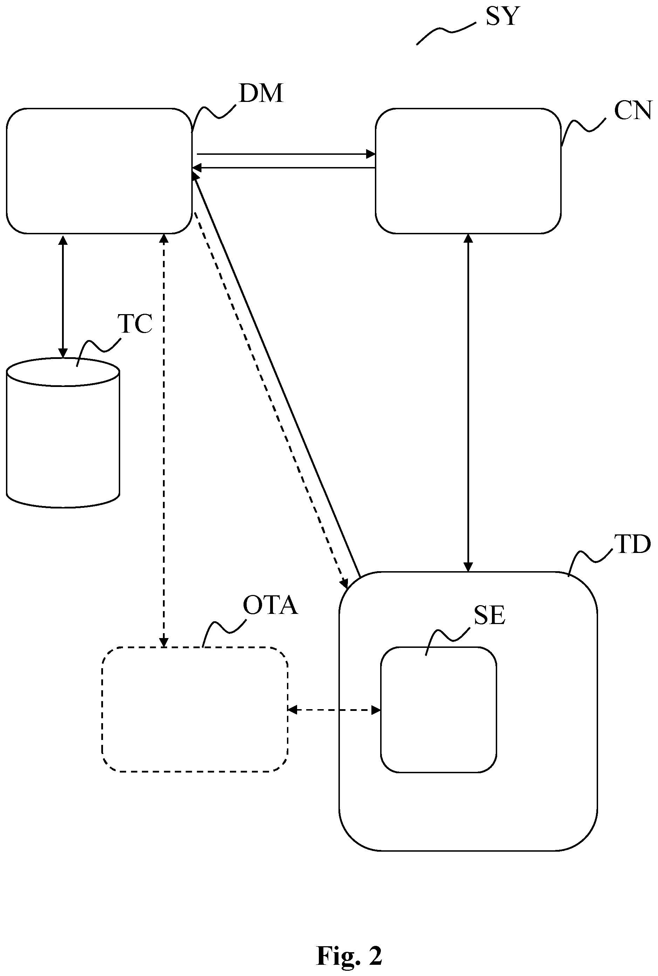

The schematic sketch of Fig. 2 depicts an exemplary embodiment of a system SY for determining the origin of a SUCI, or, whether the terminal device TD or the secure element SE hosted by the terminal device TD is capable of generating the SUCI, according to an aspect of the disclosure.

The system SY comprises a terminal device TD hosting a secure element SE. The secure element SE may be operatively coupled to the terminal device TD. The system SY further comprises a core network entity CN, a device management server DM, and an over-the-air (OTA)-server OTA. The device management server DM may be connected via the over-the-air (OTA) server OTA to the secure element SE. The system SY is configured to execute the method according to any of the aspects according to this disclosure, in particular as described with respect to Fig. 1.

The secure element SE may be configured to determine at least one identifier stored in the secure element SE and/or a terminal device TD hosting the secure element SE, wherein the at least one identifier includes the IMSI, preferably also the IMEI and/or the ICCID.

The secure element SE may be further configured to determining a service table stored in the secure element SE at least partially; and to transmit the at least one identifier and the at least partial service table to the device management server DM. Preferably, the secure element SE may be configured to transmit the at least one identifier and the at least partial service table to the OTA-Server OTA, which may store the data received from the secure element SE. Transferring the at least one identifier and the at least partial service table to the OTA-Server OTA has the advantage that already established OTA-channels may be used. The at least one identifier and the at least partial service table are preferably encrypted at least for the transport to the OTA-server OTA, more preferably also encrypted at rest at the OTA-server OTA. The device management server DM may request the at least one identifier and the at least partial service table from the OTA-server OTA and/or the OTA-server OTA may forward the at least one identifier and the at least partial service table to the device management server DM, in particular in a data stream.

The core network entity CN may be configured to transmit an identifier based on the SUCI to the device management server DM.

The device management server DM may be configured to determine the origin of the SUCI based on the at least partial service table and by matching the received identifier against the at least one identifier; and to store the origin of the SUCI, preferably in a terminal capability protocol TC.

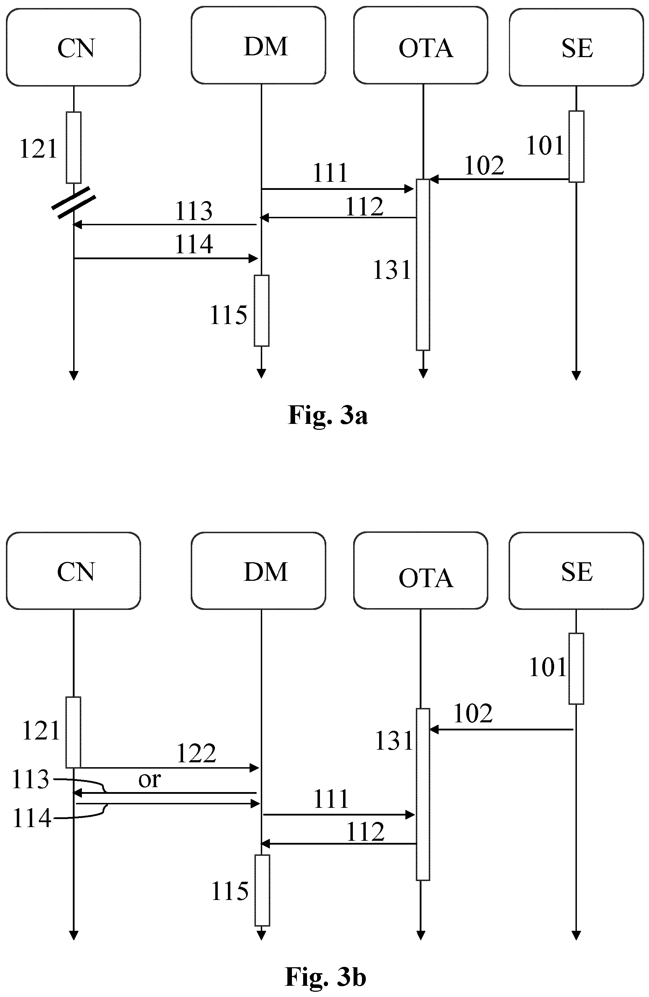

In Fig. 3a an exemplary timing sequence for a method according to a first aspect of the invention is depicted.

The timing sequence in the example of Fig. 3a includes four vertical lines or columns, each of which represents the time axis for the components core network entity CN, device management server DM, OTA-server OTA, and secure element SE, respectively.

The time axis for the core network entity CN may be broken, i. e., the step 121, according to which the core network entity performs an authentication procedure with the secure element SE, and based thereon received a SUCI, from which an identifier is extracted. The step 121 may also refer to extracting or determine the identifier from the or based on the SUCI. Due to the break in the time axis of the core network entity CN, its time axis may not be aligned with the respective time axis of the device management server DM, the OTA-server OTA, and the secure element SE.

The method may comprise in step 101: determining at least one identifier stored in the secure element SE and/or a terminal device TD hosting the secure element SE, wherein the at least one identifier includes an International Mobile Subscriber Identity, IMSI, or a Network Access Identifier, NAI; and determining a service table stored in the secure element SE at least partially. Preferably, step 101 further includes monitoring, by the secure element SE, a GET IDENTIY command. The step 101 may be collectively described as data mining step.

The method may comprise transmitting 102, by the secure element SE, the at least one identifier and the at least partial service table to the OTA-server OTA. The OTA-server OTA may be included in the device management server DM, in which case the communication between the device management server DM and the OTA-server OTA is internal, wherein the step 102 may be specified as transmitting, by the secure element SE, the at least one identifier and the at least partial service table to the device management server DM.

The method may further comprise, storing 131, by the OTA-server OTA, the at least one identifier and the at least partial service table received from the secure element SE.

The method may comprise requesting 111, by the device management server DM to the OTA-server OTA, the at least one identifier and the at least partial service table received from the secure element SE.

The method may further comprise, receiving 112 a response by the device management server DM from the OTA-server OTA, the response including the at least one identifier and the at least partial service table received from the secure element SE.

The method may comprise requesting 113, by the device management server DM to a core network entity CN, the identifier, preferably requesting the identifier based on the at least one identifier transmitted to the device management server DM.

The method may comprise receiving 114, by the device management server DM, an identifier used for authenticating at a respective core network entity CN.

The method may comprise in step 115: determining, by the device management server DM, the origin of the SUCI based on the at least partial service table and by matching the received identifier against the at least one identifier; and storing, by the device management server DM, the origin of the SUCI

The method may further comprise storing the origin of the SUCI in a terminal capability protocol TC. The terminal capability protocol TC may include: a first attribute, in which the IMEI is stored; a second attribute, in which the ICCID is stored; and a third attribute, in which the received identifier or the origin of the SUCI is stored.

In one example, the IMEI may be only and/or exclusively stored in the first attribute in the terminal capability protocol TC in case the terminal device TD is the origin of the SUCI, i. e., the SUCI has been calculated by the terminal device TD, since it may be included in the received identifier. In case the secure element SE is the origin of the SUCI, i. e., the SUCI has been calculated by the secure element SE, the ICCED may be only and/or exclusively stored in the second attribute oof the terminal capability protocol TC. Based on the data stored in the terminal capability protocol TC, in particular on the IMEI, the method may further include determining terminal device parameters, such as manufacturer, model, and so on, and storing the terminal device parameters in further attributes of the terminal capability protocol TC. Such enriched data sets may enable communication network operators to forecast which number or fraction of end users use terminal devices capable of calculating the SUCI, which facilitates migration to 5^{th} generation communication networks.

In Fig. 3b an exemplary timing sequence for a method according to a second aspect of the invention is depicted.

The variant of Fig. 3b may differ from the example of Fig. 3a in the way the device management server DM receives the identifier from the core network entity CN. In the example of Fig. 3b, the time axis of the core network entity is not broken, and therefore may be aligned with the respective time axis of the device management server DM, the OTA-server OTA, and the secure element SE.

The method steps of Fig. 3b which are also shown in Fig. 3a are described by reference to Fig. 3a. In a first variant, the method may further include transmitting 122, by the core network entity CN, a notification based on a successful authentication to the device management server DM. The notification may comprise the identifier, preferably the notification comprises the identifier extracted from the SUCI.

The transmitting 122 may be triggered upon successfully authenticating the secure element SE in step 121.

The transmitting 122 may trigger the device management server DM to request the at least one identifier and the at least partial service table received from the secure element SE in step 111.

In a second variant, the method may comprise requesting 113, by the device management server DM to the core network entity CN, an identifier, e. g., based on a regular basis. The method may comprise receiving 114, by the device management server DM, the identifier used for authenticating at a respective core network entity CN. In contrast to the first variant of Fig. 3b, the device management server DM may actively fetch identifiers from the core network entity CN and then request the at least one identifier and the at least partial service table received from the secure element SE in step 111. This configuration may allow batch processing by the device management server DM, thereby saving overall computing resources as compared to constantly allocating resources for processing notifications of the core network entity CN as these are triggered.

The second variant of Fig. 3b is similar to the example shown in Fig. 3a, however, differs in the timing of the request 113 to the core network server CN. In the second variant of Fig. 3b, step 113 may be processed prior to and independently of receiving 112 the response, by the device management server DM from the OTA-server OTA.

In Fig. 3b, the arrow corresponding to the first variant may be distinguished from the pair of opposing arrows corresponding to the second variant by the word "or".

The method may further comprise, receiving 112 the response, by the device management server DM from the OTA-server OTA, the response including the at least one identifier and the at least partial service table received from the secure element SE; and step 115 as described above for Fig. 3a.

The method may further comprise storing the origin of the SUCI in a terminal capability protocol TC, and enriching the terminal capability protocol TC, as described above with respect to Fig. 3a.

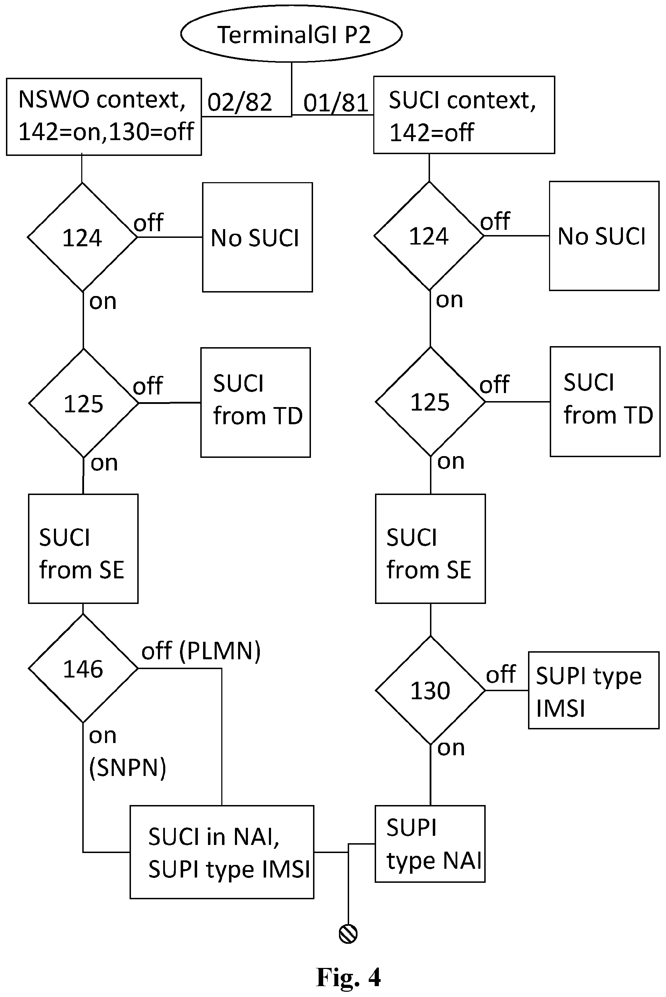

In Fig. 4 a decision tree for the portion of the EF_UST that is relevant for an aspect of the invention is depicted.

The evaluation of the decision tree of Fig. 4 may start at the ellipse, from which it branches into two different paths based on whether the GET IDENTITY (GI) of the terminal includes P2=01/81 (SUCI context) or P2=02/82 (NSWO context). The numbers depicted within the diamond shaped "decision"-elements are service numbers of the EF_UST, which may be determined by the secure element SE and provided to the device management server DM.

In the SUCI context, the service n°142 is off, i. e., not available. In the NSWO context, the service n°142 is on, i. e., available. The latter may require the service n°130 to be off.

In both the NSWO context and the SUCI context, based on the service n°124, the device management server DM may determine, if SUCI is supported by the secure element SE, i. e., if n°124=off there is no origin of a SUCI and if n°124=on, the origin of the SUCI may be further distinguished between the terminal device TD and the secure element SE.

Based on the service n°125, the device management server DM may determine if the secure element SE is configured to perform the SUCI calculation (n°125=on). Else, when n°125=off, the terminal device should be responsible for calculating the SUCI.

Exclusively in the SUCI context, based on the service n°130, the device management server DM may determine a network type for which the secure element SE is configured. If n°130=off, the SUPI type is IMSI, which refers to a public network. If n°130=on, the SUPI type is NAI, which refers to a non-public network NPN, independent on whether n°146 is on or off.

Exclusively in the NSWO-context, based on the service n°146, which is only relevant for private networks, the network type may be specified further. If n°146=on, the secure element SE is configured with an identifier of a SNPN, i. e., the private network is a standalone network.

The decision tree may end at the shaded circle.

### Reference signs:

- Sy: System
- SE: Secure element
- TD: Terminal device
- CN: Core network entity
- DM: Device management server
- TC: Terminal capability protocol

- 101: perform data mining at SE
- 102: transmit data from SE to OTA/DM
- 121: determine identifier based on SUCI
- 111: request data from OTA
- 112: receive data from OTA
- 113: request determined identifier from CN
- 114: receive determined identifier from CN
- 131: store data received from SE in OTA
- 122: receive notification from CN
- 115: determine origin of SUCI

## Claims

1. A method for determining an origin of a Subscription Concealed Identifier, SUCI, the method comprising:
determining at least one identifier stored in the secure element (SE) and/or a terminal device (TD) hosting the secure element (SE), wherein the at least one identifier includes an International Mobile Subscriber Identity, IMSI, or a Network Access Identifier, NAI;
determining a service table stored in the secure element (SE) at least partially;
transmitting the at least one identifier and the at least partial service table to a device management server (DM);
receiving, by the device management server (DM), an identifier used for authenticating at a respective core network entity (CN);
determining the origin of the SUCI based on the at least partial service table and by matching the received identifier against the at least one identifier; and
storing, by the device management server (DM), the origin of the SUCI.

2. The method of claim 1, wherein the received identifier is extracted from the SUCI.

3. The method of claim 1 or 2, further comprising: transmitting, by the core network entity (CN), a notification based on a successful authentication to the device management server (DM), wherein the notification comprises the identifier, preferably the notification comprises the identifier extracted from the SUCI.

4. The method of claim 1 or 2, further comprising: prior to receiving the identifier, requesting, by the device management server (DM) to a core network entity (CN), the identifier, preferably requesting the identifier based on the at least one identifier transmitted to the device management server (DM).

5. The method according to any of the preceding claims, wherein the at least partial service table includes the services n°124 and n°125, wherein determining the origin of the SUCI includes:
Identifying the origin to be in the secure element (SE) in case the services n°124 and n°125 are activated; and
Identifying the origin to be in a terminal device (TD) hosting the secure element (SE) in case at least the service n°125 is deactivated.

6. The method according to any of the preceding claims, wherein the at least one identifier further includes an IMEI of the terminal device (TD) and an ICCID of the secure element (SE), the method further comprising:
storing the origin of the SUCI in a terminal capability protocol (TC), wherein the terminal capability protocol (TC) includes:
a first attribute, in which the IMEI is stored;
a second attribute, in which the ICCID is stored; and
a third attribute, in which the received identifier or the origin of the SUCI is stored.

7. The method of claim 6, wherein the method further includes storing, in the third attribute, a value, preferably a Boolean value, which indicates whether the SUCI has been calculated by the terminal device (TD),
wherein the terminal capability protocol (TC) preferably includes a fourth attribute, in which a value indicating whether the SUCI has been calculated by the secure element (SE) is stored.

8. The method according to any of the preceding claims, wherein transmitting the identifier based on the SUCI includes encrypting the identifier and/or wherein the identifier is the IMSI or the NAI.

9. The method according to any of the preceding claims, wherein the at least partial service table includes the service n°130, wherein the method further includes determining a network type of the respective core network entity (CN):
determining the network type to be a public network, preferably by identifying a Subscription Permanent Identifier, SUPI, type of the SUCI to be the IMSI, if the service n°130 is off; or
determining the network type to be a private network, preferably by identifying the SUPI type of the SUCI to be the NAI, if the service n°130 is on; and
storing the network type in the terminal capability protocol (TC), preferably in a fifth attribute of the terminal capability protocol (TC).

10. The method according to any of the preceding claims, the method further includes:
transmitting, by the core network server (CN), an identity request to the terminal device (TD), in particular a GET IDENTITY command;
monitoring, by the secure element (SE), a presence of the identity request; and
including the presence of the identity request in determining the origin of the SUCI.

11. The method according to any of the preceding claims, further including:
transmitting, by the core network entity (CN), a timer related to the SUCI, preferably the timer T3570;
determining, by the device management server (DM), based on the timer, a duration of generating the SUCI; and
preferably storing the duration in a further attribute of the terminal capability protocol (TC).

12. The method according to any of the preceding claims, preferably claim 9, wherein the at least partial service table further includes the service n°142, which defines a context type for authenticating at the respective core network entity (CN), and the method further includes:
determining, by the secure element (SE), a network type based on the service n°142, wherein the network type is determined to be or include a Non-Seamless Wireless Lan Offload, NSWO, context if the service n°142 is on, and/or a SUCI context if the service n°142 is off
transmitting the network type to the device management server (DM) or storing the network type in the secure element (SE); and
preferably storing, by the device management server (DM), the network type in a fifth attribute of the terminal capability protocol (TC).

13. The method according to claim 12, wherein the at least partial service table further includes the service n°146, which defines whether a private network is a standalone non-public network, SNPN, and the method further includes:
determining, by the secure element (SE), the network type further based on the service n°146, wherein the network type is determined to include a SNPN identifier if the service n°146 is on.

14. The method according to any of the preceding claims, wherein the at least one identifier further includes an EID; and the method further includes:
determining, by the secure element (SE), the IMSI or the NAI and IMEI associated with the EID to identify whether the terminal device (TD) is multiple enabled profile (MEP)-capable; and
preferably, storing a value indicating a MEP-capability of the terminal device (TD) in a further attribute of the terminal capability protocol (TC).

15. A system (SY) for enabling a secure communication over a communication network, preferably mobile communication network, the system comprising:
a terminal device (TD) hosting a secure element (SE);
a core network entity (CN) of the communication network; and
a device management server (DM);
wherein the system (SY) is configured to execute the method according to any of the preceding claims.
